# EUROPEAN PATENT APPLICATION

(11) **EP 4 645 649 A1**
(43) Date of publication of application: **05.11.2025**
(21) Application number: 25170854.1
(22) Date of filing: 15.04.2025
(51) Int. Cl.: H02J 9/06

(54) **A WALL PLUG UNINTERRUPTIBLE POWER SUPPLY**

(30) Priority: 30.04.2024 US 202463640280 P; 20.03.2025 US 202519085449
(71) Applicant: Vertiv Corporation, Westerville, OH 43082 (US)
(72) Inventor: SOLIS, Justin B., Westerville, 43082 (US); RICCA, Steven V., Westerville, 43082 (US); SCARCI, Joseph A., Westerville, 43082 (US); BENNER, Peter A., Westerville, 43082 (US); ALEXANDER, Richard D., Westerville, 43082 (US)
(74) Representative: Bryn-Jacobsen, Caelia

(57) **Abstract**

A wall plug uninterruptible power supply (UPS) for providing backup power is disclosed. The wall plug uninterruptible power supply may include a plug, an enclosure, electronic components, and a power receptacle. The wall plug uninterruptible power supply may be configured to provide power (e.g., backup power) even when the plug does not receive any power, thereby bridging a power gap of time. For example, the bridge of power may occur at a time between when power is lost (e.g., utility power outage) to a time when power is restored or alternative power is provided by a secondary source such as a backup generator.

## Description

### CROSS-REFERENCE TO RELATED APPLICATION

The present application claims the benefit under 35 U.S.C. § 119(e) of U.S. Provisional Application Serial Number 63/640,280, filed April 30, 2024.

### TECHNICAL FIELD

The following description relates generally to backup power devices, and, in particular, to a wall plug uninterruptible power supply unit configured to provide a short-term power supply, bridging the time between when supply power is lost and then recovered or supplemental power is provided.

### BACKGROUND

Traditional wall plug power supplies provide electricity, commonly known as alternating current ("AC") for the purpose of converting the higher voltage AC from the wall electrical outlet into a lower voltage, often direct current ("DC"), suitable for use by a wide range of electronic devices such as laptops, cell phones, and other household electronics. They are essential for providing the correct voltage and current to safely power or charge these devices when plugged in and receiving power from the receptacle. They also are generally known to be light in weight and some can even offer on and off control over the plugged-in device. Yet when supply power is lost from the wall electrical outlet, the power supply is no longer able to supply power to an electronic device.

Numerous large facilities frequently engage in testing their emergency power systems to ensure readiness for power outages and continual supplies of electricity. For instance, healthcare facilities in the United States are mandated by federal and state regulations to test their emergency backup power systems (e.g., generators) monthly under load conditions. However, the required ten-second switch, which may be referred herein as the power gap of time, to backup power can cause downtime for devices not supported by an uninterruptible power supply (UPS), such as computers, monitors, nursing stations, and patient entertainment systems, necessitating manual reset afterwards, disrupting operations, and increasing staff workload, ultimately leading to dissatisfaction among patients or customers. Furthermore, the current market offerings for UPS devices are often too large for the needs of large facilities, in terms of both power capacity and physical dimensions, thus occupying excessive space and posing potential hazards in space-constrained environments. For example, current methodologies may require specialized labor to permanently wall mount an UPS and/or putting them on the floor may take up valuable space and create a tripping hazard. Furthermore, home and businesses may have a need for a localized uninterruptible power supply that can facilitate home or business electronics during a power outage.

Therefore, there is a need in the market for a UPS solution tailored for short-term power disturbances, whether due to planned backup generator tests or unexpected outages

### SUMMARY

This disclosure relates generally to a wall plug UPS having an enclosure to store electrical components, at least one plug, and at least one receptacle. The plug is configured with at least two blades for making at least partial contact with an electrical outlet that supplies electricity. The power receptacle includes at least two slots for receiving and powering an electronic device plug. The electrical components are electrically connected to at least two blades of the plug and at least two slots of the power receptacle, such as to supply power. Additionally, the electrical components are configured to supply short term power to at least two slots of the power receptacle without the plug receiving power from the electrical outlet thereby bridging the time between the loss of power and when power from electrical outlet is restored.

Moreover, a blade tension leaver is disclosed to increase the distance of the two blades of the plug, in relation to each other, such that tension is placed on the contact area between the blades and the receptacle of electrical outlet. This increased tension and contact area also increases the potential weight bearing of the enclosure such that the wall plug UPS remains secured to a wall despite any additional weight. Adhesive such as double-sided tape or clips can also be used to ensure the wall plug UPS device remains securely attached to the electrical wall outlet.

Additionally, packaging electrical components that are configured to supply short term power to at least two slots of the power receptacle causes excessive heat to build in the electrical components. Therefore, heat pipes can be incorporated for thermal management and to transfer built up heat in the electrical components to a vent incorporated in the disclosure or even to the blades for receiving power or the slots for on the wall plug UPS device.

A wall plug uninterruptible power supply (e.g., uninterruptible power supply) is disclosed in accordance with one or more illustrative examples of the present disclosure. In one illustrative example, the wall plug uninterruptible power supply may include a plug having at least two blades for receiving power. In another illustrative example, the at least two blades may be configured to partially contact two or more slots of an electrical outlet. In another illustrative example, the wall plug uninterruptible power supply may include electrical components electrically connected to the plug. In another illustrative example, the wall plug uninterruptible power supply may include an enclosure housing the plug and the electrical components. In another illustrative example, the wall plug uninterruptible power supply may include a power receptacle in contact with the enclosure. In another illustrative example, the power receptacle may be configured to provide a bridge of power over a power gap of a time.

In a further aspect, the power receptacle may be configured to provide backup power from a power source of the electrical components to the power receptacle when the at least two blades for receiving the power do not receive power. In another aspect, the power receptacle may be configured to provide the power to the power receptacle when the at least two blades for receiving the power do receive the power. In another aspect, the power gap of the time may range between one millisecond and ten milliseconds, which is small enough to avoid any disruption to the load. In another aspect, the enclosure may house a plug including at least two blades.

In another illustrative example, the wall plug uninterruptible power supply may include a blade tension lever housed within the enclosure to provide applied force to at least one blade of the plug having the at least two blades. In another illustrative example, the blade tension lever may be housed within the enclosure to provide the applied force to the at least two blades of the plug having the at least two blades. In another illustrative example, the enclosure may house the plug having the at least two blades. In another illustrative example, the wall plug uninterruptible power supply may be configured to be directly and entirely weight-supported by the electrical outlet.

A wall plug uninterruptible power supply is disclosed in accordance with one or more illustrative examples of the present disclosure. In one illustrative example, the wall plug uninterruptible power supply may include a plug having at least two blades. In another illustrative example, the at least two blades may be configured to partially contact two or more slots of an electrical outlet. In another illustrative example, the wall plug uninterruptible power supply may include an enclosure in contact with the plug having the at least two blades. In another illustrative example, the wall plug uninterruptible power supply may include a blade tension lever housed within the enclosure to provide applied force to at least one blade of the plug having the at least two blades.

In a further aspect, the blade tension lever may be housed within the enclosure to provide the applied force to the at least two blades of the plug having the at least two blades. In another aspect, the enclosure may house the plug having the at least two blades. In another aspect, the wall plug uninterruptible power supply may be configured to be directly and entirely weight-supported by the electrical outlet.

A wall plug uninterruptible power supply is disclosed in accordance with one or more illustrative examples of the present disclosure. In one illustrative example, the wall plug uninterruptible power supply may include a plug having at least two blades for receiving power. In another illustrative example, the at least two blades may be configured to partially contact two or more slots of an electrical outlet. In another illustrative example, the wall plug uninterruptible power supply may include electrical components electrically connected to the plug. In another illustrative example, the wall plug uninterruptible power supply may include an enclosure housing the plug and the electrical components. In another illustrative example, the wall plug uninterruptible power supply may include a power receptacle in contact with the enclosure. In another illustrative example, the power receptacle may be configured to provide a bridge of power over a power gap.

In a further aspect, the bridge of power over the power gap may range between one millisecond and any time. For example, the bridge of power over the power gap may range between one millisecond and at least one minute. For example, the bridge of power over the power gap may range between one millisecond and at least five minutes. In another illustrative example, the wall plug uninterruptible power supply may include a blade tension lever housed within the enclosure to provide applied force to at least one blade of the plug having the at least two blades. In another illustrative example, the blade tension lever may be housed within the enclosure to provide the applied force to the at least two blades of the plug. In another illustrative example, the enclosure may house the plug having the at least two blades. In another illustrative example, the wall plug uninterruptible power supply may be configured to be directly and entirely weight-supported by the electrical outlet. In another illustrative example, the wall plug uninterruptible power supply may include heat pipes configured to transfer built-up heat in the electrical components to a vent incorporated in the enclosure.

It is to be understood that both the foregoing general description and the following detailed description are exemplary and explanatory only and are not necessarily restrictive. The accompanying drawings, which are incorporated in and constitute a part of the specification, illustrate examples and together with the general description, serve to explain the principles here..

### BRIEF DESCRIPTION OF DRAWINGS

The numerous advantages of the disclosure may be better understood by those skilled in the art by reference to the accompanying figures.
FIG. 1 is a wall plug uninterruptible power supply, in accordance with one or more examples of the present disclosure.
FIG. 2 is an internal cross-sectional view of electrical components of the wall plug uninterruptible power supply, in accordance with one or more examples of the present disclosure.
FIG. 3 is a blade tension leaver of the wall plug uninterruptible power supply, in accordance with one or more examples of the present disclosure.

### DETAILED DESCRIPTION

Reference will now be made in detail to the subject matter disclosed, which is illustrated in the accompanying drawings. The present disclosure has been particularly shown and described with respect to certain examples and specific features thereof. The examples set forth herein are taken to be illustrative rather than limiting. It should be readily apparent to those of ordinary skill in the art that various changes and modifications in form and detail may be made without departing from the scope of the disclosure.

Examples disclosed herein are directed to a backup power bridge that can be wall plugged into a wide range of electronic devices.

An advantage of the example disclosed herein includes providing a bridge of power over a power gap of time for an electronic device. The bridge of power may occur at a time between when power is lost to a time when utility power is restored or alternative power is provided by a secondary source, e.g., a generator. The power gap may be as short as milliseconds to as long as minutes. For example, the bridge of the power gap of time may last between one millisecond and sixty thousand milliseconds. For instance, the power gap of time may last between one millisecond and ten milliseconds. The smaller the power gap of time the lower the power requirements, which results in a reduced overall weight requirement for the wall plug UPS.

The term "wall plug UPS" may be used interchangeably with "wall plug uninterruptible power supply", "wall plug uninterruptible power supply 100", "wall plug uninterruptible power supply 200", "power bridge", "wall plug power bridge", or the like throughout the present disclosure.

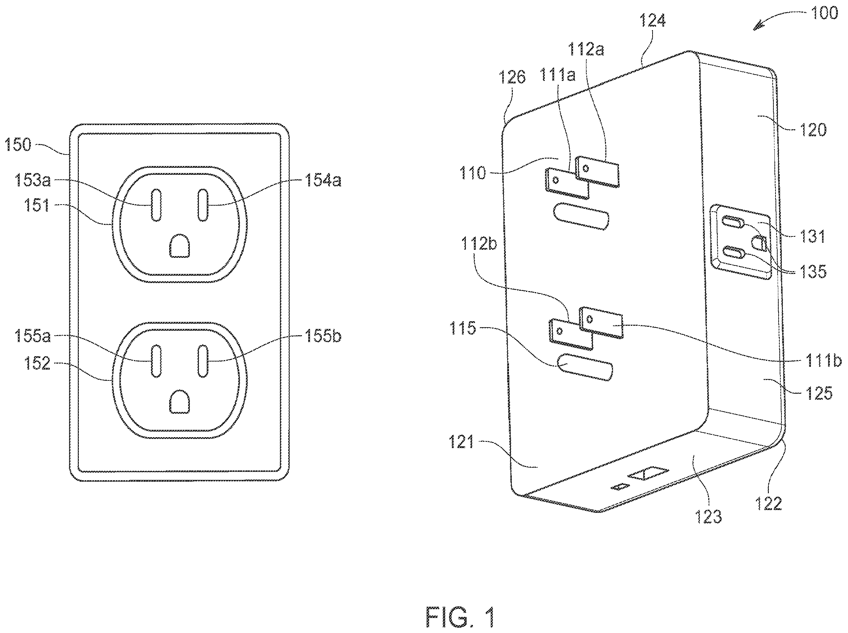

FIG. 1 is a wall plug uninterruptible power supply 100, in accordance with one or more examples of the present disclosure. FIG. 1 may aid in illustrating how at least one example of a wall plug uninterruptible power supply 100 may be configured.

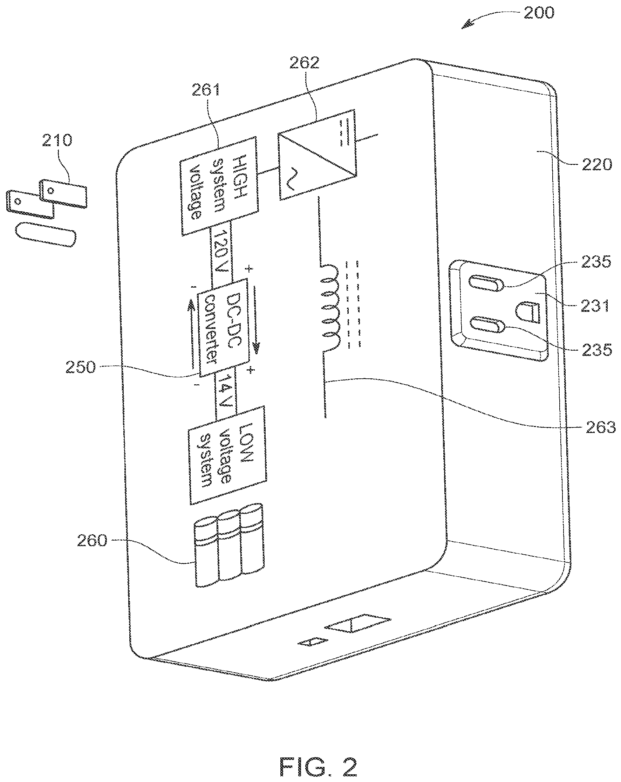

In examples, an enclosure 120 of the wall plug uninterruptible power supply 100 may include a rectangular prism shape. The wall plug uninterruptible power supply 100 may house electrical components (e.g., see electrical components 250 of FIG. 2). In examples, the wall plug uninterruptible power supply 100 may include two plugs (upper plug 110 and lower plug 115) extending outward perpendicularly to an inner plane 121 of the enclosure 120. The inner plane 121 may be configured to face backward, such as towards a wall when the wall plug uninterruptible power supply 100 is plugged into the electrical wall outlet 150 in a coupled position.

Upper plug 110 may include a proximal blade 112a and a distal blade 111a configured to partially contact the proximal slot 153a and distal slot 154a, respectively, of the electrical wall outlet 150. Concurrently, the lower plug 115 includes a proximal blade 112b and distal blade 111b configured to partially contact the proximal slot 155b and a distal slot 155a, respectively, of the electrical wall outlet 150.

As it still relates to FIG. 1, a power receptacle 131 may protrude perpendicularly relative to the right plane 123 (e.g., bottom facing surface) of the enclosure 120. In this way, the power receptacle 131 may face outwardly, in a sideways direction (e.g., left). The power receptacle 131 may also include two power slots 135 for partially connecting to a plug of an (external) electrical device (not shown). The electrical device may include any electrical device such as devices with a three-pronged plug (e.g., Type B plug) or the like. For instance, the electrical device may include a laptop, medical equipment, and/or the like.

FIG. 2 illustrates an internal cross-sectional view of the interconnectivity between the upper plug 210 (e.g., upper plug 110), the electrical components 250 housed within the enclosure, and the power slots 235 of the power receptacle 231. It is noted herein that any description associated with the wall plug uninterruptible power supply 100 depicted in FIG. 1 may be regarded as applying to wall plug uninterruptible power supply 200 depicted in FIG. 2, unless noted otherwise herein. Conversely, any description associated with the wall plug uninterruptible power supply depicted in FIG. 2 may be regarded as applying to wall plug uninterruptible power supply 100 depicted in FIG. 1, unless noted otherwise herein. Furthermore, components with a leading 1, 2, or 3 in their reference label may be interchangeably described, and any such descriptions may be carried to their counterparts in any other figures, unless noted otherwise herein.

As shown, a single upper plug 210 may be electrically connected to a single power receptacle 231 by way of electrical components 250, to provide electricity (e.g., backup power; electrical power; 110 - 125 volts; and/or the like). The electrical components may be configured to provide the electricity, without the plug receiving power from the wall electrical outlet so as to provide a power bridge over such a power gap in time. In other words, when power is lost, such as during a power outage, the electrical components may be configured to provide backup electrical power to whatever external electrical device is plugged in. Although the illustration represents one plug and one power receptacle, additional plugs and power receptacles can be also provided, such as two or more plugs/receptacles.

As shown in FIG. 2, the electrical components 250 of the wall plug uninterruptible power supply 200 may further include the following: a set of batteries 260 configured to store electrical energy (e.g., a charge), a direct current direct current (DC) to DC converter 261 configured to buck the voltage from the batteries 260 from a low state (e.g., first voltage) to a high state (e.g., second voltage higher than the first voltage), an inverter 262 configured to invert the high state DC power to alternating current (AC) power, and/or a line filter 263 configured to condition an AC line carrying the AC power.

Although batteries 260 are described, any power source known in the art of power sources may be used, including various types of rechargeable or non-rechargeable batteries and alternative energy storage devices. For example, the batteries 260 may include lithium-ion batteries, lithium-polymer batteries, nickel-metal hydride (NiMH) batteries, nickel-cadmium (NiCd) batteries, lead-acid batteries, alkaline batteries, and/or the like. Alternatively, and/or additionally, the power source may include energy storage devices such as supercapacitors, ultracapacitors, electrolytic double-layer capacitors (EDLCs), or other forms of capacitive energy storage known in the art. Such energy storage devices may be configured alone or in combination, arranged in series, parallel, or hybrid arrangements according to the desired energy capacity, voltage, discharge rate, and/or weight and size constraints of the wall plug uninterruptible power supply 200.

Additional electrical components may be required, and alternative components may be used depending on the load and electronic device. For example, electrical components 250 may include communication modules, status indicators (e.g., LED indicators, LCD displays), control circuits, microcontrollers, or other logic elements configured to manage and control charging cycles, discharge cycles, power conversion efficiency, operational modes, and/or other functional attributes of the wall plug uninterruptible power supply 200, depending upon the particular application and performance criteria.

In practical use, when the supplied power to the upper plug 210 is lost thereby creating a power gap, the electrical device (not shown) plugged into power receptacle 231 may be configured to draw power from the electrical components 250 by way of the power slots 235 of the power receptacle 231, which in turn draws power from the batteries 260, through the DC-to-DC convertor 261, the inverter 262, and the line filter 263. The electrical components 250 may be operably all connected to convert the DC power from the batteries 260 to provide AC power to the power slots 235 of the power receptacle 231 and thereby provide a power bridge over the power gap of time.

Unfortunately, in some examples, a combined weight of at least one plug, upper plug 210, the electrical components 250, the inverter 262, the line filter 263, the power receptacle 231, and the enclosure 220 is high enough that when plugged into an electrical outlet, the wall plug uninterruptible power supply 200 may weigh too much to remain plugged into an electrical outlet. For instance, the wall plug uninterruptible power supply 200 may fall out of a standard electrical outlet.

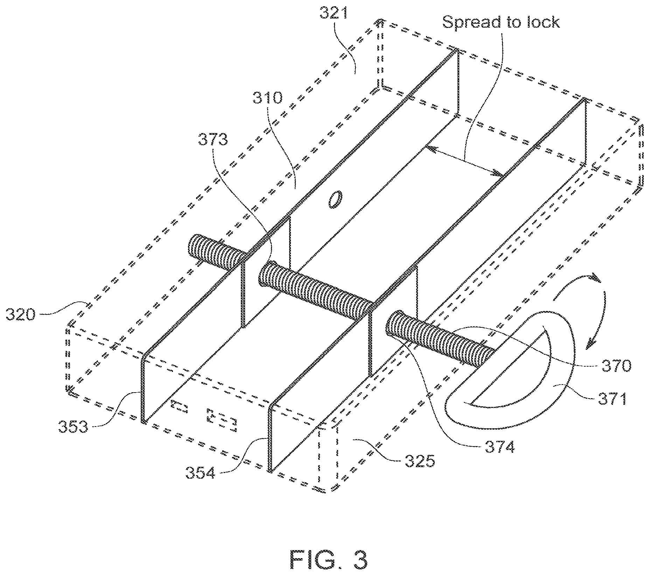

FIG. 3 is a blade tension leaver 370 of the wall plug uninterruptible power supply 200, in accordance with one or more examples of the present disclosure. The addition of the blade tension leaver 370 prevents the wall plug uninterruptible power supply 200 from falling out of the electrical outlet due to its own weight. This may allow for larger batteries, and/or more compact designs that are configured to be directly and entirely weight-supported by the electrical outlet. It is noted herein that any description associated with the wall plug uninterruptible power supply 100, 200 depicted in FIGS. 1-2 may be regarded as applying to wall plug uninterruptible power supply depicted in FIG. 3, unless noted otherwise herein. Conversely, any description associated with the wall plug uninterruptible power supply depicted in FIG. 3 may be regarded as applying to wall plug uninterruptible power supply 100, 200 depicted in FIGS. 1-2, unless noted otherwise herein. Furthermore, components with a leading 1, 2, or 3 in their reference label may be interchangeably described, and any such descriptions may be carried to their counterparts in any other figures, unless noted otherwise herein. For example, 131 and 231 may be interchangeably described.

The blade tension leaver 370 may include a threaded fastener 373 configured to be operably connected to the proximal blade 354. The threaded fastener 373 may extend in parallel with the inner plane 321 and secured through a threaded fastener hole 374 of the right plane 325 of the enclosure 320 such that a fastener head 371 may be connected thereto. Operably, the fastener head 371 may be turned clockwise thereby screwing in the threaded fastener which is operably configured to apply an applied force on an inner portion of the proximal blade 354. This inner portion of the proximal blade 354 resides within the enclosure 320 and is perpendicular to the inner plane 321, extending through the inner plane 321 such that it can be inserted into an electrical wall outlet. Furthermore, the inner portion of the proximal blade 354 uses the inner plane 321 as a fulcrum such that applied force can be applied to move the proximal blade 354 in relation to the distal blade 353. When the applied force is applied while the plug 310 is partially contacting with an electrical outlet (not shown) the applied force provides additional contact force between the proximal blade 354 with the slot of the electrical outlet, not shown thereby enabling additional load bearing weight. In the current figure, the contact force is applied to the proximal blade 354, yet it can be applied to the distal blade 353, or even the grounding pin (not shown). Such contact force examples including a blade tension leaver 370 may also be applied to a second plug (not shown) together with plug 310 for additional applied force and to further increase the potential holding weight.

In examples, the wall plug uninterruptible power supply 100 includes heat pipes (not shown) configured to be incorporated for thermal management and to transfer built up heat in the electrical components to a vent incorporated in the enclosure 120 (or even to the blades) for receiving power or the slots for on the wall plug UPS device.

In examples, the wall plug uninterruptible power supply 200 may further include or accommodate external battery modules (e.g., external battery cabinets) (not shown) configured to provide additional runtime beyond the capability of the internal battery. For example, the wall plug uninterruptible power supply 200 may include a modular input battery power terminal configured to allow external battery cabinets (EBCs) or modules to physically connect, attach, or "snap" onto the enclosure 120, thereby increasing the total available energy storage capacity. Such external battery modules may include a range of sizes, capacities, and form factors, enabling users to selectively configure the wall plug uninterruptible power supply 200 according to their individual runtime requirements. In instances, the base wall plug uninterruptible power supply 200 may include a relatively small internal battery designed for brief runtime intervals, such as twenty to thirty seconds, sufficient to bridge short-term power gaps or momentary outages.

By way of example, external battery cabinets or modules may be offered in progressively larger capacities, such as small, medium, and large external battery modules, providing incremental increases in runtime ranging from several minutes up to multiple hours, depending upon the energy storage capacity selected. In specific instances, smaller external battery modules may provide an additional few minutes of runtime suitable for safely shutting down sensitive electronic equipment, while larger external battery cabinets may provide extended runtime suitable for supporting critical devices through prolonged power outages or maintenance periods. Such modular scalability may allow users to customize their backup power configuration, balancing runtime duration, physical footprint, and overall system cost, according to their specific operational needs and preferences.

In examples, the wall plug uninterruptible power supply 200 may be particularly suitable for medical applications, including scenarios involving generator self-testing in healthcare facilities. For instance, medical facilities may periodically (e.g., monthly) perform generator self-tests to verify backup power system readiness, during which brief power interruptions or transfer delays may occur. The wall plug uninterruptible power supply 200 may provide temporary bridging power to sensitive medical equipment during these tests, thereby ensuring continuous, uninterrupted operation and preventing disruption of patient care or diagnostic processes. Additionally and/or alternatively, examples of the wall plug uninterruptible power supply 200 may extend beyond medical applications, finding utility among consumer and enterprise customers seeking localized backup power solutions. For example, consumers may utilize the wall plug uninterruptible power supply 200 to protect personal electronics, home office equipment, or network devices, while enterprise users may utilize the device to provide backup power for critical servers, computing equipment, telecommunications hardware, or other essential business devices.

In examples, the wall plug uninterruptible power supply 200 may also include surge protection functionality in addition to battery backup capability. For example, the wall plug uninterruptible power supply 200 may include surge protection components, such as metal-oxide varistors (MOVs), transient voltage suppression (TVS) diodes, gas discharge tubes, or other surge suppression devices known in the art, configured to limit voltage spikes, transient surges, or electrical disturbances originating from the power grid. Such surge protection may protect connected electronic devices or critical loads from damage or degradation caused by power surges, lightning strikes, or transient electrical anomalies.

Further examples are set out in the clauses below:
1.A wall plug uninterruptible power supply comprising:
   a plug having at least two blades for receiving power, wherein the at least two blades are configured to partially contact two or more slots of an electrical outlet;
   electrical components, electrically connected to the plug;
   an enclosure, housing the plug and the electrical components; and
   a power receptacle in contact with the enclosure, wherein the power receptacle is configured to provide a bridge of power over a power gap of a time.
2.The wall plug uninterruptible power supply of clause 1, wherein the power receptacle is configured to provide backup power from a power source of the electrical components to the power receptacle when the at least two blades for receiving the power do not receive power.
3.The wall plug uninterruptible power supply of clause 1 or 2, wherein the power receptacle is configured to provide the power to the power receptacle when the at least two blades for receiving the power do receive the power.
4.The wall plug uninterruptible power supply of any one of the preceding clauses, wherein the power gap of the time ranges between one millisecond and ten milliseconds.
5.The wall plug uninterruptible power supply of any one of the preceding clauses, wherein the enclosure houses a plug including the at least two blades.
6.The wall plug uninterruptible power supply of any one of the preceding clauses, further comprising a blade tension leaver housed within the enclosure to provide applied force to at least one blade of the plug having the at least two blades.
7.The wall plug uninterruptible power supply of clause 6, wherein the blade tension leaver, housed within the enclosure to provide the applied force to the at least two blades of the plug having the at least two blades.
8.The wall plug uninterruptible power supply of clause 6 or 7, wherein the enclosure houses the plug having the at least two blades.
9.The wall plug uninterruptible power supply of any one of clauses 6-8, wherein the wall plug uninterruptible power supply is configured to be directly and entirely weight-supported by the electrical outlet.
10.A wall plug uninterruptible power supply comprising:
   a plug having at least two blades, the at least two blades configured to partially contact two or more slots of an electrical outlet;
   an enclosure, in contact with the plug having the at least two blades; and
   a blade tension leaver housed within the enclosure to provide applied force to at least one blade of the plug having the at least two blades.
11.The wall plug uninterruptible power supply of clause 10, wherein the blade tension leaver, housed within the enclosure to provide the applied force to the at least two blades of the plug having the at least two blades.
12.The wall plug uninterruptible power supply of clause 10 or 11, wherein the enclosure houses the plug having the at least two blades.
13.The wall plug uninterruptible power supply of any one of clauses 10-12, wherein the wall plug uninterruptible power supply is configured to be directly and entirely weight-supported by the electrical outlet.
14.A wall plug uninterruptible power supply comprising:
   a plug having at least two blades for receiving power, the at least two blades configured to partially contact two or more slots of an electrical outlet;
   electrical components, electrically connected to the plug;
   an enclosure, housing the plug and the electrical components; and
   a power receptacle in contact with the enclosure, wherein the power receptacle is configured to provide a bridge of power over a power gap.
15.The wall plug uninterruptible power supply according to clause 14, wherein the bridge of power over the power gap of a time ranging between one millisecond and sixty thousand milliseconds.
16.The wall plug uninterruptible power supply of clause 14 or 15, further comprising a blade tension leaver housed within the enclosure to provide applied force to at least one blade of the plug having the at least two blades.
17.The wall plug uninterruptible power supply of clause 16, wherein the blade tension leaver, housed within the enclosure to provide the applied force to the at least two blades of the plug having the at least two blades.
18.The wall plug uninterruptible power supply of clause 16 or 17, wherein the enclosure houses the plug having the at least two blades.
19.The wall plug uninterruptible power supply of any one of clauses 16-18, wherein the wall plug uninterruptible power supply is configured to be directly and entirely weight-supported by the electrical outlet.
20.The wall plug uninterruptible power supply according to any one of clauses 14-19, further comprising heat pipes configured to transfer built up heat in the electrical components to a vent incorporated in the enclosure.

Examples have been described in the context of preferred and other examples and not every example of the present disclosure has been described. Obvious modifications and alterations to the described examples are available to those of ordinary skill in the art having the benefits of the present disclosure. The disclosed and undisclosed examples are not intended to limit or restrict the scope or applicability of the examples conceived of by the Applicant, but rather, in conformity with the patent laws, Applicant intends to fully protect all such modifications and improvements that come within the scope or range of equivalents of the following claims.

The herein described subject matter sometimes illustrates different components contained within, or connected with, other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "connected" or "coupled" to each other to achieve the desired functionality, and any two components capable of being so associated can also be viewed as being "couplable" to each other to achieve the desired functionality. Specific examples of couplable include but are not limited to physically interactable and/or physically interacting components and/or wirelessly interactable and/or wirelessly interacting components and/or logically interactable and/or logically interacting components.

It is believed that the present disclosure and many of its attendant advantages will be understood by the foregoing description, and it will be apparent that various changes may be made in the form, construction, and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

## Claims

1. A wall plug uninterruptible power supply comprising:
a plug having at least two blades for receiving power, the at least two blades configured to partially contact two or more slots of an electrical outlet;
electrical components, electrically connected to the plug;
an enclosure, housing the plug and the electrical components; and
a power receptacle in contact with the enclosure, wherein the power receptacle is configured to provide a bridge of power over a power gap.

2. The wall plug uninterruptible power supply according to claim 1, wherein the bridge of power over the power gap of a time.

3. The wall plug uninterruptible power supply according to claim 2, wherein the gap of time ranges between one millisecond and sixty thousand milliseconds.

4. The wall plug uninterruptible power supply of any one of the preceding claims, further comprising a blade tension leaver housed within the enclosure to provide applied force to at least one blade of the plug having the at least two blades.

5. The wall plug uninterruptible power supply of claim 4, wherein the blade tension leaver, housed within the enclosure to provide the applied force to the at least two blades of the plug having the at least two blades.

6. The wall plug uninterruptible power supply of claim 4, wherein the enclosure houses the plug having the at least two blades.

7. The wall plug uninterruptible power supply of any one of claims 4-6, wherein the wall plug uninterruptible power supply is configured to be directly and entirely weight-supported by the electrical outlet.

8. The wall plug uninterruptible power supply according to any one of the preceding claims, further comprising heat pipes configured to transfer built up heat in the electrical components to a vent incorporated in the enclosure.

9. The wall plug uninterruptible power supply of claim 2, wherein the power receptacle is configured to provide backup power from a power source of the electrical components to the power receptacle when the at least two blades for receiving the power do not receive power.

10. The wall plug uninterruptible power supply of claim 2, wherein the power gap of the time ranges between one millisecond and ten milliseconds.

11. A wall plug uninterruptible power supply comprising:
a plug having at least two blades, the at least two blades configured to partially contact two or more slots of an electrical outlet;
an enclosure, in contact with the plug having the at least two blades; and
a blade tension leaver housed within the enclosure to provide applied force to at least one blade of the plug having the at least two blades.

12. The wall plug uninterruptible power supply of claim 11, wherein the blade tension leaver, housed within the enclosure to provide the applied force to the at least two blades of the plug having the at least two blades.

13. The wall plug uninterruptible power supply of claim 11 or 12, wherein the enclosure houses the plug having the at least two blades.

14. The wall plug uninterruptible power supply of any one of claims 11-13, wherein the wall plug uninterruptible power supply is configured to be directly and entirely weight-supported by the electrical outlet.
